(19) Europäisches Patentamt
European Patent Office
Office européen des brevets

(11) **EP 4 692 910 A1**

(12) **EUROPEAN PATENT APPLICATION**
published in accordance with Art. 153(4) EPC

(43) Date of publication:
**11.02.2026 Bulletin 2026/07**

(21) Application number: **24780829.8**

(22) Date of filing: **29.03.2024**

(51) International Patent Classification (IPC):
***G02C 7/06*** (2006.01)

(52) Cooperative Patent Classification (CPC):
**G02C 7/06**

(86) International application number:
**PCT/JP2024/013093**

(87) International publication number:
**WO 2024/204734 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023055748**

(71) Applicant: **Hoya Lens Thailand Ltd.
Pathumthani 12130 (TH)**

(72) Inventors:
• **QI Hua
Tokyo 160-8347 (JP)**
• **MATSUOKA Shohei
Tokyo 160-8347 (JP)**

(74) Representative: **Betten & Resch
Patent- und Rechtsanwälte PartGmbB
Maximiliansplatz 14
80333 München (DE)**

(54) **EYEGLASS LENS AND DESIGN METHOD FOR EYEGLASS LENS**

(57)    There is provided a spectacle lens that is a spectacle lens 10 including: a clear region 11 located so as to include a lens center; and a defocus region 12 located around the clear region 11, wherein the clear region 11 is configured as a single focal surface to which a prescription power is imparted so that a light beam incident from an object-side surface is emitted from an eyeball-side surface and is converged on a retina of an eyeball of a spectacle wearer; the defocus region 12 has a plurality of segment regions 12a to which a power different from the prescription power is imparted so that the light beam incident from the object-side surface is emitted from the eyeball-side surface and is converged on a position different from on a retina of the eyeball of the spectacle wearer; and an area ratio of non-segment regions to a combined area of the plurality of segment regions 12a and the non-segment regions other than the segment regions 12a in the defocus region 12 is 0% or more and 25% or less.

FIG. 1

## Description

Technical Field

The present disclosure relates to spectacle lens and a spectacle lens design method.

Description of related art

In recent years, a spectacle lens that inhibits or reduces a progression of refractive error such as myopia and hyperopia has been attracting attention. For example, there are two types of myopia progression suppressing lenses: those that reduce contrast and those that provide a defocus effect. Patent Document 1 describes a method for reducing an arbitrary spatial frequency contrast by Zernike aberration control. Also, Patent Document 2 describes a configuration in which light is scattered by protrusions (dot pattern) having a diameter of about 0.3 mm, thereby reducing the arbitrary spatial frequency contrast.

Prior art document

Patent document

[Patent Document 1] JP 2021-073533 A
[Patent Document 2] JP 2022-068287 A

Summary of the invention

Problem to be solved by the invention

It is preferable that a spectacle lens that suppresses or reduces the progression of refractive error not only has the effect of suppressing or reducing the progression of the refractive error, but also does not cause a wearer to feel discomfort when wearing the spectacles. However, the technique disclosed in Patent Document 1 is not intended to provide a function that takes into account an eyeball rotation, which is a problem specific to spectacles, and therefore there is a risk that a spectacle wearer feels discomfort in this regard. Further, in the technique disclosed in Patent Document 2, a lens exterior appears to flicker white due to light scattering, which is aesthetically unsightly when the lens is worn, and this may cause the spectacle wearer to feel discomfort.

One aspect of the present disclosure provides a technique relating to a spectacle lens that enables the suppression or reduction of the progression of refractive error while allowing a wearer to wear the spectacles without feeling any discomfort.

Means for solving the problem

A first aspect of the present disclosure is a spectacle lens including:

a clear region located so as to include a lens center; and

a defocus region located around the clear region, wherein the clear region is configured as a single focal surface to which a prescription power is imparted so that a light beam incident from an object-side surface is emitted from an eyeball-side surface and is converged on a retina of an eyeball of a spectacle wearer;

the defocus region has a plurality of segment regions to which a power different from the prescription power is imparted so that the light **beam incident** from the object-side surface is emitted from the eyeball-side surface and is converged on a position different from on a retina of the eyeball of the spectacle wearer; and

an area ratio of non-segment regions to a combined area of the plurality of segment regions and the non-segment regions other than the segment regions in the defocus region is 0% or more and 25% or less.

A second aspect of the present disclosure is the spectacle lens according to the first aspect, wherein the plurality of segment regions are arranged with periodicity.

A third aspect of the present disclosure is the spectacle lens according to the second aspect,

wherein the plurality of segment regions are arranged such that a center of each segment region is located at a vertex of each triangle constituting a triangular lattice;

a planar size d on a lens when the segment region exists alone is in a range of 0.25 mm to 2.0 mm; and

the planar size d and an arrangement spacing p satisfy a relationship of $0.866 < p/d < 1.1$.

A fourth aspect of the present disclosure is the spectacle lens according to the second or third aspect, wherein the adjacent segment regions are arranged so as to be in contact with each other.

A fifth aspect of the present disclosure is the spectacle lens according to the first aspect,

wherein the segment region has a convex portion having a positive defocus power with respect to the prescription power so that the light beam is converged on a position closer to an object side than on the retina.

A sixth aspect of the present disclosure is the spectacle lens according to the first aspect,

wherein the segment region has a concave portion having a negative defocus power with respect to the prescription power so that the light beam is converged on a position farther from an object side than on the retina.

A seventh aspect of the present disclosure is the spectacle lens according to the fifth or sixth aspect,

wherein the non-segment region is formed in a curved shape having a defocus power of a different sign from that of the segment region.

An eighth aspect of the present disclosure is the spectacle lens according to the seventh aspect,

wherein a first derivative is continuous in the vicinity of a boundary between the segment region and the non-segment region.

A nineth aspect of the present disclosure is the spectacle lens according to the first aspect,

wherein the segment region is a region formed by a convex closed curve, and the non-segment region is a region formed by a non-convex closed curve.

A tenth aspect of the present disclosure is the spectacle lens according to the first aspect, including an optical film covering the plurality of segment regions.

An eleventh aspect of the present disclosure is the spectacle lens according to the first aspect,

wherein the defocus region is annular with an inner diameter of 6 mm or more and 12 mm or less and an outer diameter of 40 mm or more.

A twelfth aspect of the present disclosure is the spectacle lens according to the eleventh aspect,

wherein the segment regions are arranged such that an area ratio of the non-segment regions is different within the defocus region.

A thirteenth aspect of the present disclosure is the spectacle lens according to the eleventh or twelfth aspect,

wherein five or more of the segment regions are included within a range of a predetermined diameter corresponding to a pupil diameter at an arbitrary position within the defocus region.

A fourteenth aspect of the present disclosure is a spectacle lens design method for designing either one of an object side or an eyeball side optical surface, the method including:

a first step of designing an optical surface so that a clear region configured as a single focal surface imparted with a prescription power is located at a position including a lens center, to allow a light beam incident on an object-side surface to be emitted from an eyeball-side surface and converged on a retina of an eyeball of a spectacle wearer; and

a second step of designing the optical surface so that a defocus region having a plurality of segment regions imparted with a power different from the prescription power is arranged around the clear region, to allow the light beam incident on the object-side surface to be emitted from the eyeball-side surface and converged on a position different from on the retina of the eyeball of the spectacle wearer,

wherein the second step is the step of designing the optical surface so that an area ratio of non-segment regions with respect to a combined region of the plurality of segment regions and the non-segment regions other than the segment regions in the defocus region, is 0% or more and 25% or less.

Advantage of the invention

According to one aspect of the present disclosure, there is provided a spectacle lens that allows a spectacle wearer to experience a comfortable fit when wearing the spectacles, while suppressing or reducing the progression of refractive error.

Brief description of the drawings

[FIG. 1] FIG. 1 is an explanatory view showing a planar configuration example of a spectacle lens, according to one embodiment of the present disclosure.

[FIG. 2] FIG. 2 is an explanatory view showing a cross-sectional configuration example of the spectacle lens, according to one embodiment of the present disclosure.

[FIG. 3] FIG. 3 is an explanatory view showing an arrangement example of segment regions in the spectacle lens, according to one embodiment of the present disclosure.

[FIG. 4] FIG. 4 is an explanatory view showing another arrangement example of the segment regions in the spectacle lens, according to one embodiment of the present disclosure.

[FIG. 5] FIG. 5 is an explanatory view showing a cross-sectional configuration example of the non-segment regions in the spectacle lens, according to one embodiment of the present disclosure.

[FIG. 6] FIG. 6 is an explanatory view (part 1) showing a specific example of optical properties of the spectacle lens, according to one embodiment of the present disclosure.

[FIG. 7] FIG. 7 is an explanatory view (part 2) showing a specific example of the optical properties of the spectacle lens, according to one embodiment of the present disclosure.

[FIG. 8] FIG. 8 is an explanatory view (part 3) showing a specific example of the optical properties of the spectacle lens, according to one embodiment of the present disclosure.

[FIG. 9] FIG. 9 is an explanatory view showing a specific example of a procedure for designing the segment regions in the spectacle lens according to one embodiment of the present disclosure.

Detailed description of invention

Hereinafter, one embodiment of the present disclosure will be described with reference to the drawings. Note that the following description is merely an example, and the present invention is not limited to the illustrated embodiment.

(1) Configuration of a spectacle lens

First, a configuration of a spectacle lens according to one embodiment of the present disclosure will be described.

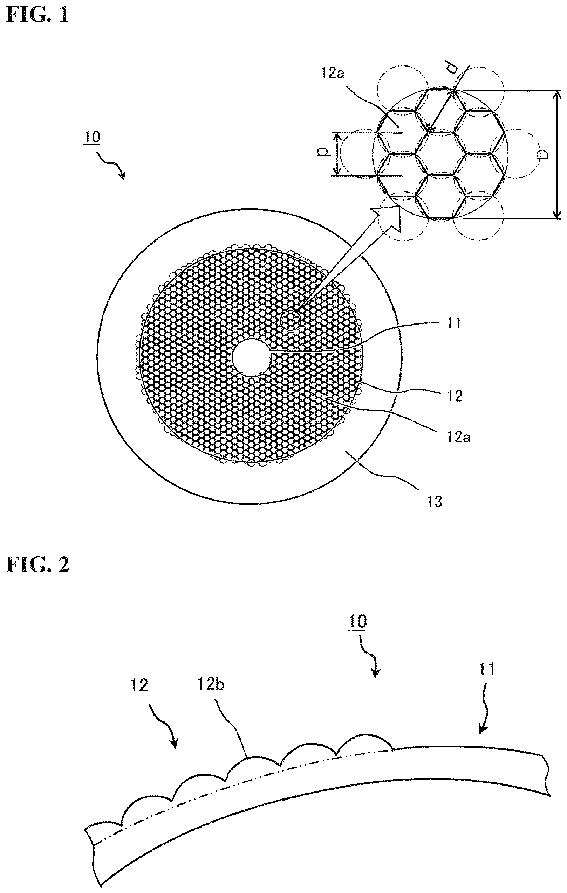

FIG. 1 is an explanatory view showing a planar configuration example of the spectacle lens according to one embodiment, and FIG. 2 is an explanatory view showing a cross-sectional configuration example of the spectacle lens.

The spectacle lens given as an example in this specification has an object-side surface and an eyeball-side surface. The "object-side surface" is the surface that is located on the object side when spectacles equipped with the spectacle lens are worn by a wearer, and the "eyeball-side surface" is the opposite, i.e., the surface that is located on the eyeball side when spectacles equipped with the spectacle lens are worn by a wearer. This relationship also applies to a lens base material that forms the basis of the spectacle lens. That is, the lens base material also has the object-side surface and the eyeball-side surface.

In this specification, the horizontal direction when the spectacle lens is worn is defined as X direction, the top-bottom direction is defined as Y direction, and the thickness direction of the spectacle lens which is perpendicular to the X and Y directions is defined as Z direction.

The Z direction is also an optical axis direction of the spectacle lens. An origin is a lens center. The "lens center" in this specification refers to an optical or a geometric center of the spectacle lens. This specification shows, for example, a case where the optical center and the geometric center substantially coincide with each other. The "geometric center" refers to the center of a circle when the shape is circular in a planar view, such as an uncut lens before shaping, and refers to the center of gravity in a planar view when the shape is other than the circular shape.

Facing the wearer, a right side is +X direction, a left side is -X direction, an upper side is +Y direction, a lower side is -Y direction, an object-side direction is +Z direction, and an opposite direction thereto (a rear side direction) is -Z direction. In this specification, "planar view" refers to a state when viewed from the +Z direction to the -Z direction.

Each drawing in the present application illustrates a right-eye lens in the planar view, with a nose side direction being the +X direction and an ear side direction being the -X direction when the right-eye lens is worn.

Hereinafter, when discussing a "position" such as an eye point and a geometric center of a spectacle lens, this refers to a position in a planar view unless otherwise specified.

As shown in FIG. 1, the spectacle lens 10 has, when viewed in the planar view, at least a clear region 11 positioned so as to include a lens center, and a defocus region 12 positioned around the clear region 11. The spectacle lens 10 may include a second clear region 13 around the defocus region 12.

The clear region 11 is a portion having a smooth surface shape that can realize a prescribed refractive power for the wearer from the viewpoint of geometrical optics, and is, for example, a portion that is transparent in a visible light wavelength range. Then, the clear region 11 is configured to allow a light beam incident from the object-side surface to exit from the eyeball-side surface, enter the pupil of the eyeball of the wearer, and converge on the retina of the eyeball.

Further, the clear region 11 is configured as a region including the lens center and/or an eye point. The "eye point (EP)" is, for example, a position through which the line of sight passes when the spectacle lenses are worn and the wearer looks straight ahead, and this example will be given below. The eye point may be a position through which the line of sight passes when the wearer visually recognizes an object close to the wearer (in other words, when viewing near), that is, a near vision eye point. One aspect of the present disclosure shows, for example, a case where the geometric center of a spectacle lens before being fitted into a frame coincides with the eye point, coincides with a prism reference point, and coincides with the lens center. Hereinafter, as an example of the spectacle lens according to one aspect of the present disclosure, a spectacle lens before being fitted into a frame will be given, but the present disclosure is not limited to this aspect. The position of the eye point can be specified by referring to a remark chart or a centration chart issued by a lens manufacturer.

Such a clear region 11 realizes the prescription power (spherical power, cylindrical power, cylindrical axis, etc.) of the spectacle lens 10. The spherical power may be the power to be corrected when looking straight ahead (the distance from the object is from infinity to about 1 m) (for example, distance power; hereafter, distance power will be exemplified) or it may be the power to be corrected when looking at intermediate distances ( 1 m to 40 cm) or near distances (40 cm to 10 cm).

That is, the clear region 11 is the region for achieving a prescription power of the spectacle wearer so that the light beam is converged on the retina, and is configured as a single focal surface to which the prescription power is imparted.

The prescription data of the wearer's information is written on a lens bag of the spectacle lens. That is, when prepared as a set with the lens bag, it can be identified as a spectacle lens based on the prescription data of the wearer's information. Generally, the spectacle lens is provided as a set with the lens bag. Therefore, the technical idea of the present disclosure is reflected in the spectacle lens that comes with the lens bag, and the same applies to the set of the lens bag and the spectacle lens.

The clear region 11 is formed, for example, in a circular shape in a planar view. In this case, the size of the clear region 11 is preferably set so that, for example, an outer diameter is 6 mm or more and 12 mm or less. When the clear region 11 is arranged at a position including the lens center and/or the eye point, taking into account the convergence of the eyes of the spectacle wearer, the lens may be arranged so as to be offset toward a nose side of the spectacle wearer with respect to the lens center and/or eye point.

When the spectacle lens 10 has a second clear region 13, the second clear region 13 is also configured in the same manner as the clear region 11, except that it includes the lens center and/or the eye point.

The clear region 11 and the second clear region 13 as described above have a function as a so-called single focus lens.

The defocus region 12 is an annular region arranged to surround the clear region 11. When the spectacle lens 10 includes the second clear region 13, the defocus region 12 is positioned so as to be sandwiched between the clear region 11 and the second clear region 13. In this case, it is preferable that the defocus region 12 is annular in shape with an inner diameter of 6 mm or more and 12 mm or less and an outer diameter of 40 mm or more. When the inner diameter is 6 mm or more, the size of the clear region 11 can be ensured as a required size and a sufficient size. Further, when the inner diameter is 12 mm or less and the outer diameter is 40 mm or more, the size of the defocus region 12 can be ensured as a required size and a sufficient size, which is preferable for realizing a defocus effect described later.

The defocus region 12 is configured to have a plurality of segment regions 12a. The segment regions 12a are provided to allow a light beam incident on the object-side surface to exit from the eyeball-side surface of the spectacle lens 10 so that the light beam is converged on a position different from on the retina of the eyeball of the spectacle wearer. In other words, the segment regions 12a are the regions for achieving a power different from the prescription power of the spectacle wearer so that the light beam is converged on a position different from on the retina, and is configured to be imparted with a power different from the prescription power.

By providing a plurality of such segment regions 12a, the defocus region 12 also has a function as a region for achieving a power different from the prescription power of the spectacle wearer so that the light beam is converged on a position different from that on the retina. As will be described in detail later, the defocus region 12 may be a region formed by combining a plurality of segment regions 12a, or a region formed by combining a plurality of segment regions 12a with non-segment regions that are regions other than the segment regions 12a.

Each of the plurality of segment regions 12a constituting the defocus region 12 has a convex portion 12b formed on the object-side surface of the spectacle lens 10, as shown in FIG. 2. The convex portion 12b has a curved surface that protrudes convexly toward an object side, and is configured to have a positive defocus power with respect to the prescription power of the clear region 11 so that the light beam passing through the spectacle lens 10 is converged on a position closer to the object side than on the retina. In this way, it is known that by converging the light beam on a position closer to the object side than on the retina, the segment region 12a having the convex portion 12b can achieve a myopia progression suppression effect, which suppresses the progression of myopia in the case where the spectacle wearer is myopic.

However, each segment region 12a is not limited to having the convex portion 12b. Each segment region 12a may have, for example, a concave portion having a curved surface that curves in the opposite direction to the convex portion 12b (that is, a concave portion that converges the light beam on a position farther from the object side than on the retina), so long as it converges the light beam passing through the spectacle lens 10 on a position different from on the retina. In this way, it is known that by the segment region 12a having a concave shape and having a negative defocus power relative to the prescription power of the clear region 11 so that the light beam is converged on a position farther from the object side than on the retina, a hyperopia improvement effect can be obtained that improves the degree of hyperopia in the case where the spectacle wearer is hyperopic.

With reference to these findings, it may be determined whether each segment region 12a should have a convex portion 12b or a concave portion, or whether a mixture of both, depending on the degree of refractive error of the wearer. For example, the convex portion 12b may be used for myopic people, and the concave portion may be used for hyperopic people. In this way, converging a light beam on a position different from on the retina in order to obtain the effect of suppressing progression of myopia or improving hyperopia may be referred to as a "defocus effect" hereinafter.

The following description shows a case where each segment region 12a is configured to have a convex portion 12b, but even in the case where the concave portion is provided, an optical action, which will be described in detail later, is substantially the same in either case, except for that resulting from the converging position of the light beam.

As shown in FIG. 2, the convex portions 12b constituting each segment region 12a are arranged so as to align along the curved surface constituting the clear region 11 (i.e., the curved surface for achieving the prescription power of the spectacle wearer). The curved surface constituting the clear region 11 is an optical surface that functions as a single focus lens in accordance with the prescription power of the spectacle wearer. That is, the convex portions 12b of each segment region 12a are aligned along the curved surface having a curvature that is the same as, or differs so little from, the optical surface configured to converge the light beam on the retina of the eyeball. When the convex portions 12b are aligned along such a curved surface, difference in magnification or the like between the clear region 11 and the defocus region 12 can be suppressed, and when another person views the wearer's appearance, the size of the eyes, etc., does not appear different depending on the region.

Each of the segment regions 12a thus configured has a planar size d, arrangement spacing p, and refractive power set as follows so that the light beam is converged on a position different from on the retina.

The planar size d of the segment region 12a is a representative value of a size, when viewed in plan, of an area surrounded by a boundary line of the intersection between the curved surface that constitutes the segment region 12a (hereinafter referred to as a "segment curved surface") and a lens curved surface that serves as a base for arranging the segment region 12a (Hereinafter, this will also be referred to as a "base lens curved surface.") when the segment region 12a exists alone. For example, when the boundary line is a circle, the maximum value, average value, median value, or the like of the diameter of the circle corresponds to the planar size d. In actuality, when the spacing between adjacent segment regions 12a is sufficiently large, that is, when the segment regions 12a are spaced apart from each other, the segment regions 12a are the regions surrounded by the boundary line of the intersection between the segment curved surface and the base lens curved surface, but when the spacing between the adjacent segment regions 12a is small and the two segment regions 12a partially overlap each other, the line of the intersection between both segment curved surfaces becomes the boundary line. That is, the segment region 12a is a region surrounded by lines of intersection between the segment curved surface of the segment region 12a and the segment curved surfaces of all adjacent segment regions 12a or lines of intersection with the base lens curved surface. When the two adjacent segment regions 11 have even one common boundary line, the two segment regions 11 are said to be "in contact" with each other.

In this embodiment, the planar size d of the segment region 12a is set to be in a range of, for example, 0.25 mm or more and 2.0 mm or less, and preferably in a range of 0.25 mm or more and 1.3 mm or less. When the planar size d is 0.25 mm or more, it is preferable in that the difficulty in forming fine irregularities is reduced compared to when the planar size d is smaller than 0.25 mm. Further, when the planar size d is 2.0 mm or less, and preferably 1.3 mm or less, irregularities of that size are difficult to perceive, which is preferable in that the aesthetic appearance of the spectacle lens 10 can be prevented from being impaired.

The arrangement spacing p between the segment regions 12a is a distance value between reference points in the adjacent segment regions 12a when each segment region 12a is viewed in a plan view (for example, the center point of a planar shape or the apex of a convex shape when the segment region 12a exists alone).

In this embodiment, a lower limit of the arrangement spacing p between the segment regions 12a is set to, for example, 0.25 mm or more, and preferably 1.0 mm or more. When the arrangement spacing p is 0.25 mm or more, scattered reflection due to external lighting is suppressed, and the spectacle lens 10 does not appear to other people as white flickering. Also, by setting the arrangement spacing p as being relatively large, 1.0 mm or more, the risk of flickering (looking like a screen door) for the spectacle wearer can be reduced, which is caused by false resolution due to diffraction effects brought about by the periodicity of the arrangement. An upper limit of the arrangement spacing p between the segment regions 12a is set, for example, based on a pupil diameter of a human eye, and is set to 2.0 mm or **less, which** is approximately half an average pupil diameter. By setting the arrangement spacing p to be somewhat small, 2.0 mm or less, local prism is suppressed and there is no effect on eye convergence.

Further, the planar size d and the arrangement spacing p between the segment regions 12a can be determined depending on what ratio to be used between the area of the segment regions 12a and the area of the non-segment regions other than the segment regions 12a which will be described in detail later. When aiming for the effect of suppressing the progression of myopia or improving hyperopia, it is better to reduce the area of the non-segment regions. As an example, in the case where the center of the segment region 12a having a circular planar shape is disposed at the vertex of a triangle constituting a triangular lattice, it is desirable to set the planar size d and the arrangement spacing p so as to satisfy the relationship of $0.866 < p/d < 1.1$. When satisfying $p < 0.866d$, the non-segment regions that exist between the segment regions 12a completely disappear, so there is no need to satisfy $p/d < 0.866$. On the other hand, when satisfying $p/d > 1.1$, the non-segment regions become large, and there is a risk that the defocus effect, which is the objective of this technique, will not be achieved. In this way, when the segment regions 12a are arranged at the vertices of the triangles that constitute the triangular lattice, a maximum defocus effect can be obtained, while satisfying the above-described constraints (conditions) set for the planar size d and the arrangement spacing p. The segment regions 12a may be arranged in other patterns instead of being arranged at the vertices of the triangles that constitute the triangular lattice. In this case, a different constraint may be set for p/d so as to maximize a desired defocus effect.

A refractive power of the segment region 12a is a defocus power caused by the convex portion 12b of the segment region 12a. The defocus power is not simply a "power" but is a deviation expressed in units of D (diopters) between a case where the segment region 12a exists and a case where it does not exist (i.e., in the case of a curved surface equivalent to that of the clear region 11). That is, the defocus power corresponds to a difference in power relative to the clear region 11.

In this embodiment, the refractive power (defocus power) of the segment region 12a is set appropriately so that the spectacle lens 10 achieves defocus effect. When the planar size d and the arrangement spacing p satisfy the above constraints (conditions), by adjusting the defocus power, the degree of the defocus effect can be adjusted without excessively increasing or decreasing the risk. Specifically, by setting the defocus power to, for example, about 3.51D to 5.80D, the defocus effect can be achieved.

The convex portion 12b of each segment region 12a having such a refractive power is not particularly limited in its curved shape, but may be configured, for example, in a spherical shape (spherical lens). In this case, excessive scattering is less likely to occur when the light beam passes through the spectacle lens 10, which is preferable. Also, for example, the convex portion 12b may be configured in an aspheric shape (aspheric lens) having a stronger power on a periphery side than in the vicinity of the apex (center) of the convex portion 12b. In this case, since the periphery contributes to the decrease in visual acuity, the maximum defocus effect is achieved, which is favorable.

Further, in addition to setting the planar size d, arrangement spacing p, and refractive power of each segment region 12a as described above, the area ratio of the segment regions 12a is set as follows. When the spectacle lens 10 is viewed in a plan view, within the range of the defocus region 12, there may be a plurality of segment regions 12a and non-segment regions that are regions other than the segment regions 12a. The area ratio of the segment regions 12a here refers to the ratio of the area of the non-segment regions with respect to the combined area of the segment regions 12a and the non-segment regions.

In this embodiment, the area ratio of the non-segment regions is set to be 0% or more and 25% or less. An upper limit of the area ratio of the non-segment regions is preferably 18% or less, more preferably 12% or less, and even more preferably 10% or less. In the case of 18%, a boundary length between the segment region 12a and the non-segment region per area of the segment region 12a can be smaller than that in the case of 25%, and when the area ratio is 12%, the boundary length can be even smaller. Limiting the boundary length in this manner is preferable in terms of suppressing light scattering and the like caused by the boundary between the segment region 12a and the non-segment region. In the case of 10%, the planar size d of the segment region 12a and the arrangement spacing p can be about p/d=1.0 while further suppressing the boundary length. A lower limit of the area ratio of the non-segment regions is preferably 2.4% or more. This is because, in the case of 2.4%, the boundary length between the segment region 12a and the non-segment region per area of the segment region 12a becomes a minimum value. When the lower limit of the area ratio of the non-segment regions is below this limit, for example, 0%, that is, when there is no non-segment regions and the region is covered only by the segment regions 12a, compared with the case where the lower limit is 2.4% or more, the boundary length per area of the segment region 12a becomes larger, and scattering per defocusing effect may become larger.

It is preferable that such an area ratio of the non-segment regions is satisfied over an entire defocus region 12. However, the area ratio of the non-segment regions is not limited thereto, and it is sufficient that at least a partial region of the defocus region 12 as shown in FIG. 1 is satisfied. The partial region of the defocus region 12 here refers to a region that belongs to a range of a predetermined diameter D assumed at an arbitrary position within the range of the defocus region 12. The predetermined diameter D is, for example, $\varphi 2.5$ mm or more and $\varphi 5.0$ mm or less, and is preferably about 4.0 mm which is an average pupil diameter. That is, the above-described area ratio needs to be satisfied within a region of a predetermined diameter D that is approximately the average pupil diameter assumed at an arbitrary position within the range of the defocus region 12.

By satisfying each constraint (condition) described above, the segment regions 12a are respectively arranged with periodicity. The periodicity referred to here means that the segment regions 12a are repeatedly arranged according to a certain rule. Therefore, the segment regions 12a may not be arranged at equal intervals, but as long as they are arranged with some regularity, they are considered to be arranged with periodicity. For example, in the arrangement of the plurality of segment regions 12a, even in an arrangement in which the segment regions at specific positions are thinned out, there is periodicity when there is regularity.

Further, the segment regions 12a are respectively arranged so that adjacent segment regions 12a are in contact with each other. For example, when the area ratio of the non-segment regions is 0%, the segment regions 12a are arranged so that their entire periphery is in contact with other segment regions 12a. However, the entire periphery is not required to be in contact with other segment regions 12a, and it is sufficient that each segment region 12a is arranged so that at least a part of the segment region 12a is in contact with another segment region 12a.

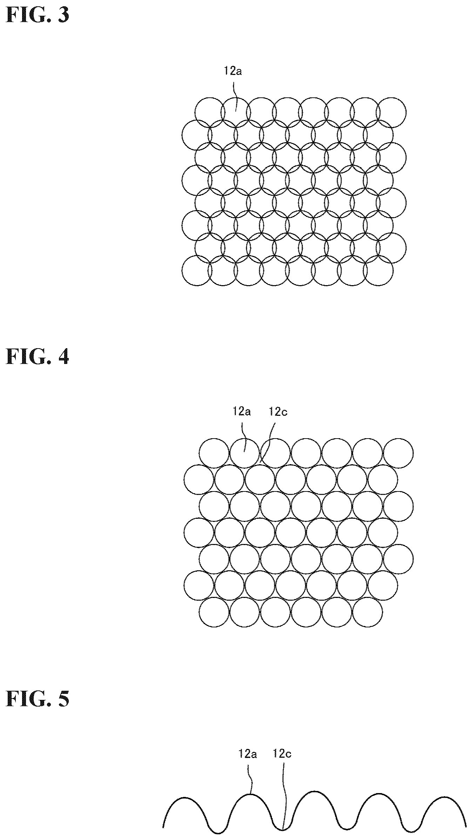

FIG. 3 is an explanatory view showing an arrangement example of the segment regions 12a. The figure shows a case where the entire periphery of each segment region 12a is in contact with other segment region 12a, and the area ratio of the non-segment regions is 0%.

In the case of such an arrangement example, the segment regions 12a are arranged so that the center of each segment region 12a is positioned at the vertex of a triangle that constitutes a triangular lattice. Thereby, the segment regions 12a are positioned in a honeycomb (staggered) pattern. The segment regions 12a are arranged in a positional relationship such that the vicinity of their respective peripheries overlap and are superimposed on one another. Therefore, according to such an arrangement example, each segment region 12a can be arranged most efficiently within a limited range, and the planar shape of each segment region 12a is a polygon (specifically, for example, a hexagon) defined by the boundaries of each segment curved surface.

FIG. 4 is an explanatory view showing another arrangement example of the segment regions 12a. **In** the illustrated example, the planar shape of each segment region 12a is circular, a part of the periphery is in contact with other segment regions 12a, and the area ratio of the non-segment regions is greater than 0%.

**In** this arrangement example also, the center of each segment region 12a is located at the vertex of a triangle that constitutes the triangular lattice, and the segment regions 12a are positioned in a honeycomb (staggered) pattern. However, in the case of such an arrangement example, the segment regions 12a do not overlap each other and a part of the outer periphery of each segment region 12a is in contact with other segment regions 12a, and therefore the non-segment regions 12c exist between the segment regions 12a. However, the area ratio of the non-segment regions 12c is 25% or less. Further, in the case of this arrangement example, there is no discontinuous portion (step) at the boundary between the segment region 12a and the non-segment region 12c. Therefore, light scattering due to discontinuous portions does not occur, and the occurrence of a white appearance, particularly a mesh-like appearance, can be suppressed.

The arrangement examples shown in FIG. 3 and FIG. 4 are merely examples, and the arrangement of the segment regions 12a is not limited to these examples.

When a non-segment region 12c exists between the respective segment regions 12a, the non-segment region 12c may be configured as follows.

FIG. 5 is an explanatory view showing a cross-sectional configuration example of the non-segment region 12c.

As shown in the figure, when each segment region 12a has a convex portion 12b, the non-segment regions 12c can be formed in a curved shape (i.e., a concave shape) that curves in the opposite direction to the convex portions 12b so as to connect the adjacent convex portions 12b. **In** this case, in contrast to a situation that the segment region 12a causes the light beam to converge on a position closer to the object side than on the retina, the non-segmented region 12c causes the light beam to converge on a position farther from the object side than on the retina. That is, the non-segment region 12c can be formed into a curved shape having a defocus power of an opposite sign to that of the segment region 12a so as to cause the light beam to converge on a position on the opposite side of the segment region 12a with the retina sandwiched therebetween.

That is, the non-segment region 12c has a surface having a negative power compared to the power (i.e., a prescription power) in the clear region 11. Such a configuration is suitable for obtaining the optical properties described below, can efficiently reduce contrast, and is particularly robust against manufacturing errors in the size of the planar size d of the segment region 12a. Further, as shown in the optical properties described below, a high frequency portion of the contrast curve neatly falls off while leaving an extremely low frequency portion that causes glare, resulting in a comfortable fit for a spectacle wearer. **In** addition, since the segment regions 12a and the non-segmented regions 12c are smoothly connected, scattering and the like that previously occurred at the boundary is reduced.

As described above, in the configuration including the segment region 12a and the non-segmented region 12c, both the segmented region 12a and the non-segmented region 12c can be regions with a different prescription power. **In** such a case, each segment region 12a is configured as a region surrounded by a convex closed curve. Here, the convex closed curve is the one that is closed by a contour shape with no recesses, such as a circle or a regular hexagon. On the other hand, the non-segment regions 12c, which are regions other than the segment regions 12a, are each configured as a region surrounded by a non-convex closed curve. Here, the non-convex closed curve is different from the convex closed curve and refers to a contour shape having a concave shape portion or a contour shape having a missing shape portion such as a hole.

**In** the above configuration, the boundary between the segment region 12a and the non-segment region 12c or the boundary between the segment regions 12a can be considered as a point of switching the direction of the curved surface shape (positive or negative sign when expressed in terms of defocus power).

Further, in the vicinity of the boundary between the segment region 12a and the non-segment region 12c, a first differential is continuous. Here, the first differential being continuous means that the slope of the surface is not discontinuous. Therefore, when the first differential is continuous, the continuity of the surface can be ensured, and a preferable lens shape for the spectacle lens 10 can be configured.

As described above, the area ratio of the non-segment regions 12c is set to be 0% or more and 25% or less, but the area ratio does not necessarily have to be uniform within the defocus region 12. For example, in the defocus region 12, the segment regions 12a may be respectively arranged such that the area ratio of the non-segment regions 12c varies depending on a position within the region. Specifically, in the portion closer to the clear region 11 (i.e., an intermediate portion between the clear region 11 and the defocus region 12), the area ratio of the non-segment regions 12c may be higher compared to other portions. In this way, when the segment regions 12a are respectively arranged so that the area ratio of the non-segment regions 12c varies within the defocus region 12, a defocusing effect can be provided while reducing a discomfort in the field of vision of the spectacle wearer. In such a case, when the planar size d of the segment regions 12a is reduced and the area ratio of the non-segment regions 12c is increased, the defocusing effect may be reduced, so it is preferable to increase the arrangement spacing p of the segment regions 12a. Further, even in the intermediate portion with a high area ratio, it is preferable to make the non-segment region 12c have a curved shape (i.e., a concave shape) that curves in the opposite direction to the convex portion 12b, as this makes the contrast curve smoother and makes it easier for the spectacle wearer to see.

**In** any one of the above cases (i.e., regardless of whether the area ratio is uniform or not), it is preferable that five or more segment regions 12a are included within a range of a predetermined diameter (for example, 4 mm) corresponding to the pupil diameter at an arbitrary position within the defocus region 12. This is because when there are fewer than five segment regions 12a, there is a risk that this will be perceived as shaking.

When each segment region 12a has a convex portion 12b, the convex portion 12b is considered to be formed from a lens base material that constitutes the spectacle lens 10. The same applies to the shape of the non-segment region 12c.

The lens base material is composed of a thermosetting resin material such as thiourethane, allyl, acrylic, or epithio. As the resin material constituting the lens base material, other resin materials that can provide a desired refractive index may be selected. Further, the lens base material may be composed of inorganic glass instead of the resin material. When such a lens base material is used, the convex portion 12b or the like can be formed by a molding processing using a mold.

The surface of the lens base material may be coated with an optical film. Examples of the optical film include a hard coat film (HC film) and an anti-reflection film (AR film), and in addition to these, other films may also be formed. These optical films may be formed using a known technique, and detailed description thereof will be omitted here.

When the optical film is coated, the optical film covers each segment region 12a. **In** this case, the optical film may be formed thin so that its surface conforms to the surface shape of the lens base material, or may be formed thick so as to fill in and smooth out the irregularities on the surface shape of the lens base material. When the optical film is formed thick, the non-segment regions 12c can be easily formed into a curved shape (for example, a concave shape) that is curved in the opposite direction to the segment regions 12a.

The shape of the non-segment region 12c may be given by a process of grinding and cutting the mold. Alternatively, a discontinuous shape may be given in the process of grinding and cutting the mold, which is then smoothed out by a subsequent polishing process. Also, the lens may be formed into a desired shape in consideration of a deformation of a lens base material caused by molding.

In either case, it is preferable that the spectacle lens 10, which is composed of the lens base material and the optical film, has a refractive index of 1.55 or more and more preferably about 1.59 for a light beam incident from the object-side surface.

(2) Optical properties of the spectacle lens

Next, optical properties of the spectacle lens 10 having the above-described configuration will be described.

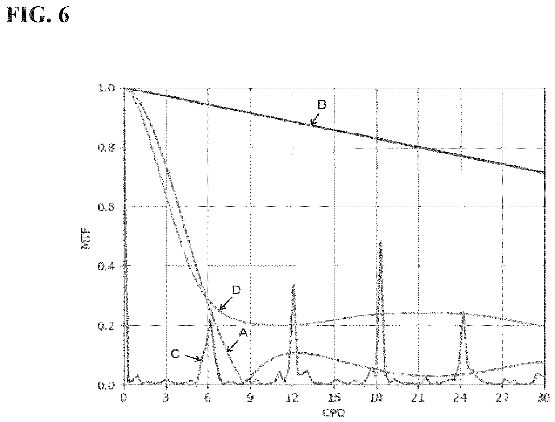

FIG. 6 is a view (part 1) showing a specific example of the optical properties of the spectacle lens 10. The example shows a relationship between contrast and spatial frequency of light transmitted through a lens, with the horizontal axis indicating a spatial frequency (CPD: cycles per degree) and the vertical axis indicating the modulation transfer function (MTF).

In the figure, symbol A indicates a specific example of the optical properties of the spectacle lens 10 having the above-described configuration, in the case of p = 1.0 mm and p/d = 1.0. Symbols B to D are comparative examples compared to the specific example of symbol A. The symbol B indicates a specific example of the optical properties of a single-focus lens having the same prescription power as the clear region 11 of the spectacle lens 10 having the above-described configuration. Symbol C indicates a specific example of the optical properties of a spectacle lens that has a segment region defined by a convex portion but does not satisfy the above-described constraints (conditions) (for example, a planar size of the segment region is less than 0.2 mm, here 0.15 mm). Symbol D indicates a specific example of the optical properties of a spectacle lens that has a segment region defined by a convex portion but does not satisfy the above-described constraints (conditions) (for example, an area ratio of the non-segment region is approximately 30 to 70%, here set to 50%).

As shown in FIG. 6, in the spectacle lens 10 having the above-described configuration, the contrast sensitivity is cut to a low level in a range of CPD > 8 (see symbol A). That is, such a spectacle lens 10 acts as a low-pass filter that cuts out high-frequency components while leaving the low-frequency components, and can efficiently reduce contrast in the high-frequency portion of the contrast curve. Accordingly, the high frequency components neatly fall off while leaving the extremely low frequency components that cause glare, resulting in a comfortable fit for the spectacle wearer. Further, due to falling off of the high frequency portion, scattering and the like are reduced, which also improves a comfortable fit for the spectacle wearer. In contrast, in a spectacle lens that does not satisfy the above-described constraints (conditions) (see symbols C and D), the contrast sensitivity in the range of CPD > 8 is not sufficiently cut. For example, the spectacle lens indicated by symbol C has contrast sensitivity peaks at high spatial frequencies (for example, CPD=12, 18, 24), and is not preferable in terms of the risk of causing spurious resolution.

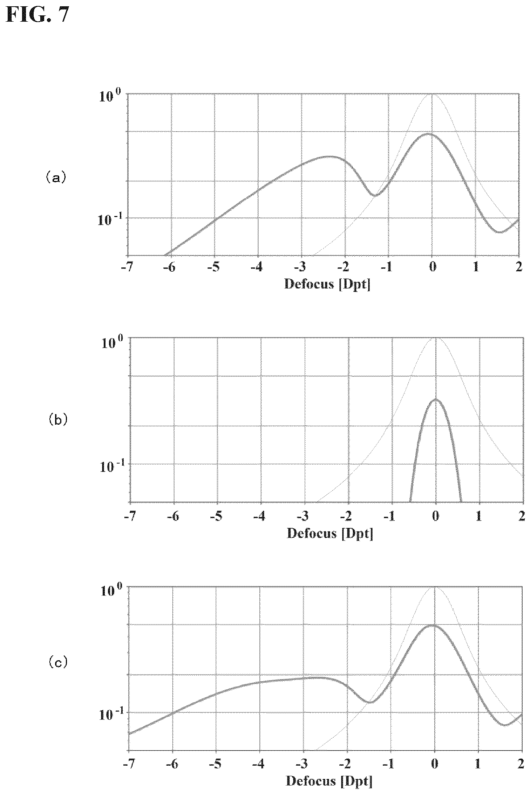

FIG. 7 is an explanatory view (part 2) showing a specific example of the optical properties of the spectacle lens 10. The illustrated example shows the relationship between the optical transfer function of the light transmitted through the lens and the defocus power, with the horizontal axis indicating the defocus power (diopter: Dpt) and the vertical axis indicating the visual Strehl of the optical transfer function (VSOTF).

FIG. 7(a) shows a specific example of the optical properties of the spectacle lens 10 having the above-described configuration, which corresponds to the symbol A. FIGS. 7(b) and 7(c) are both comparative examples compared to the specific example of FIG. 7(a). FIG. 7(b) shows a specific example corresponding to symbol C in FIG. 6. FIG. 7(c) shows a specific example corresponding to symbol D in FIG. 6.

As shown in FIG. 7(a), for the spectacle lens 10 having the above-described configuration, a VSOTF peak is formed not only at a position near 0 Dpt but also at a position near -2.5. That is, a defocus peak is also formed, and it is found that the defocus effect for obtaining the effect of suppressing the progression of myopia or the effect of improving hyperopia is certainly achieved. In contrast, in the spectacle lenses shown in FIGS. 7(b) and (c), the defocus peak is not sufficiently formed, and it cannot be said that the defocus effect is necessarily achieved.

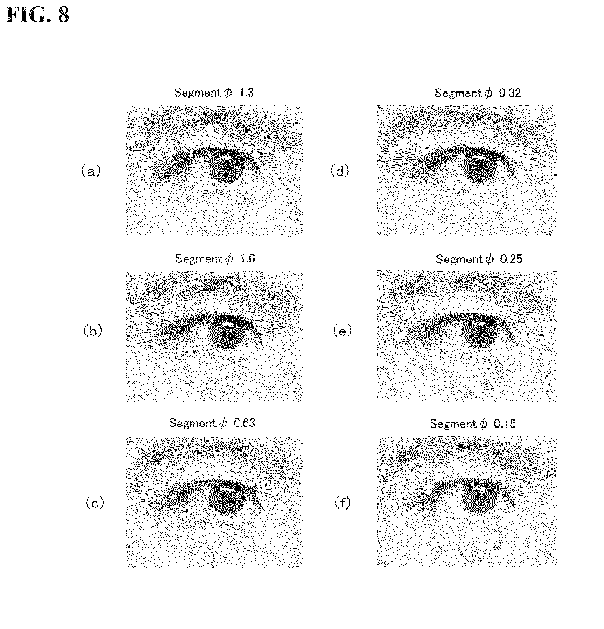

FIG. 8 is a view (part 3) showing a specific example of the optical properties of the spectacle lens 10. The illustrated example shows the results of a simulation of an appearance of a person wearing spectacle lenses when viewed from a position 1 m away in an indoor environment with a fluorescent light installed on a ceiling.

(a) shows a case where the planar size d of the segment region 12a is φ1.3 mm,
(b) shows a case where the planar size d of the segment region 12a is φ1.0 mm,
(c) shows a case where the planar size d of the segment region 12a is φ0.63 mm,
(d) shows a case where the planar size d of the segment region 12a is φ0.32 mm,
(e) shows a case where the planar size d of the segment region 12a is φ0.25 mm, and
(f) shows a case where the planar size d of the segment region 12a is φ0.15 mm. In any one of the above cases, the protruding height of the convex portion 12b from the curved surface of the base lens is 1.2 μm.

When viewing from outside the appearance of the person wearing the spectacle lens in an indoor environment exposed to fluorescent light, a composite image of the wearer's eyes, which is a transmitted image, and a reflected image of the fluorescent light are visually recognized on the surface of the spectacle lens. In this case, when the segment size (segment diameter) on the spectacle lens is large, the transmitted image will appear mosaic-like, but when the segment size is small, the mosaic effect will no longer be noticeable and the image will appear blurry overall. As the segment size becomes smaller, the reflected image picks up a wider range of illumination light, and reflected light becomes visible over an entire lens. Due to the combined effects of these factors, the smaller the segment size, the more cloudy the spectacle lens appears.

As shown in FIG. 10 (f), when the planar size d of the segment region 12a is φ0.15 mm, the spectacle lens 10 appears whitish and cloudy, and the outline of the wearer's eye appears blurred. In contrast, as shown in FIGS. 10 (a) to (e), when the planar size d of the segment region 12a is φ0.25 mm or more, the spectacle lens 10 will not become cloudy and the outline of the wearer's eye will be clearly visible. For these reasons, it can be said that it is extremely preferable for the planar size d of the segment region 12a to be 0.25 mm or more in order to prevent the aesthetic appearance of the spectacle lens 10 from being impaired.

On the other hand, as shown in FIG. 10 (a), when the planar size d of the segment region 12a is φ1.3 mm, some parts of the region start to look like mosaics. For this reason, the planar size d of the segment region 12a may be in the range of 0.25 mm or more and 2.0 mm or less, but from the viewpoint of preventing the aesthetic appearance of the spectacle lens 10 from being impaired, it is even more preferable to set the planar size d to 1.3 mm or less.

As described above, the spectacle lens 10 described in this embodiment not only has a defocusing effect to suppress the progression of myopia or improve hyperopia, but also does not impair the aesthetic appearance of the spectacle lens 10 when viewed from the outside while being worn. Therefore, according to the spectacle lens 10 described in this embodiment, even when the effect of suppressing the progression of myopia or improving hyperopia is obtained, the risk that spectacle wearers will feel reluctant to wear the spectacles can be eliminated.

(3) Spectacle lens design method and manufacturing method

Next, a spectacle lens design method and a manufacturing method for the spectacle lens 10 having the above-described configuration will be described.

When designing the spectacle lens 10, various data (prescription data) including the prescription power of the spectacle wearer are specified in advance.

Then, when designing the spectacle lens 10, first, the clear region 11 on one of the optical surfaces on the object side and the eyeball side is designed as a first step in designing the optical surface. Specifically, based on pre-specified prescription data, the shape of the curved surface constituting the clear region 11 is determined so that the light beam incident from the object-side surface in the clear region 11 is emitted from the eyeball-side surface and converged on the retina of the eyeball of the spectacle wearer. Further, the position and size of the clear region 11 are determined so as to include the lens center and/or the eye point of the spectacle lens 10.

When the spectacle lens 10 has the second clear region 13, the second clear region 13 is also designed in the first step together with the design of the clear region 11.

The curved surface determined in the first step becomes a base lens curved surface that will be the basis in the second step described below.

Thereafter, in the second step of designing the optical surface, the defocus region 12 on the optical surface is designed. Specifically, the position and size of the defocus region 12 are determined so as to be arranged around the clear region 11. Then, a plurality of segment regions 12a are arranged in the range of the determined defocus region 12, so as to be aligned along the curved surface of the base lens, thereby determining the surface shape that constitutes the defocus region 12. For example, in the case where the segment regions 12a are arranged in a honeycomb (staggered) pattern on the optical surface, a virtual triangular net is stretched on the curved surface of the base lens, the net being constituted of a combination of equilateral triangles, each of which has a length of one side equal to the arrangement spacing p between each segment region 12a, **and the** convex portions 12b constituting each segment region 12a are arranged so that the reference points of each segment region 12a (for example, the center point of the planar shape or the vertex of the convex shape) are located at the vertices of the equilateral triangle in the triangular net. At this time, when the vicinity of the periphery of each segment region 12a overlaps each other, the position with a highest height from the curved surface of the base lens, including the surface of the curved surface of the base lens, is determined to be an outermost surface of the optical surface. **In** this manner, the convex portions 12b constituting each segment region 12a are joined together to obtain the surface shape of the optical surface of the defocus region 12 in the spectacle lens 10.

When arranging each segment region 12a, at least each of the planar size d and the arrangement spacing p are set in advance so that the planar size d is in a range of 0.25 mm or more and 2.0 mm or less, the arrangement spacing p is in a range of 0.25 mm or more and 2.0 mm or less, and the planar size d and the arrangement spacing p satisfy a relationship of 0.866 < p/d < 1.1. Thereby, after each segment region 12a is arranged, the area ratio of the non-segment region 12c with respect to the combined area of each segment region 12a and the non-segment region 12c is 0% or more and 25% or less. That is, the segment regions 12a are respectively arranged so that the area ratio of the non-segment regions is 0% or more and 25% or less.

More specifically, when each segment region 12a is configured by the convex portion 12b, the segment regions 12a may be arranged as follows.

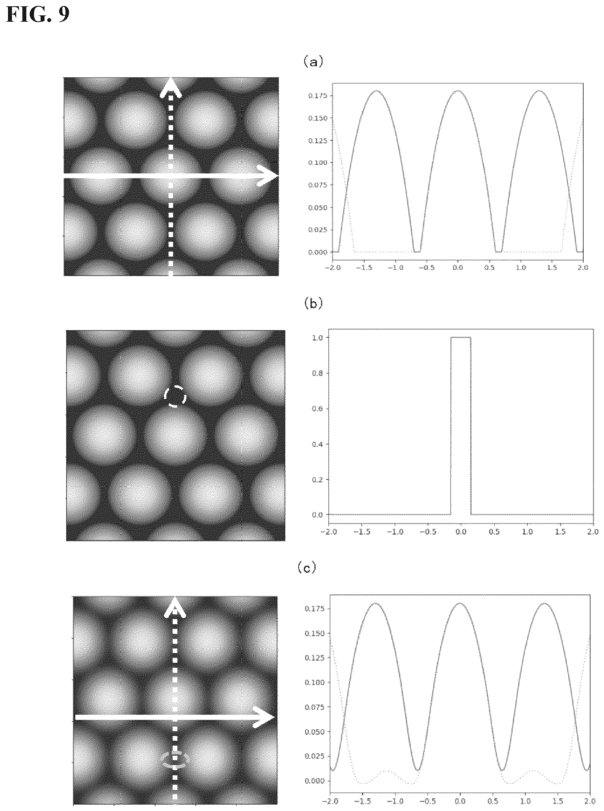

FIG. 9 is an explanatory view showing a specific example of a procedure for designing the segment regions.

As shown in FIG. 9 (a), as a first procedure, segment spherical surfaces (aspheric surfaces are also acceptable) are discretely arranged on a plane. The plane at this time corresponds to the curved surface of the base lens. The illustrated example shows a case where the curved surfaces with a diameter of 1.2 mm and a height of 0.18 mm are arranged at intervals of 1.3 mm. In FIG. 11 (a), the left side view shows the arrangement in a 2 mm square area, and the right side view shows a cross-sectional view taken along arrows, with solid and dotted lines in the right side view corresponding to the arrows in the left side view.

Then, as shown in FIG. 9 (b), as a second procedure, smoothing is performed using a smoothing filter. In FIG. 9 (b), the left-side view shows the diameter of the smoothing filter, and the right-side view shows its cross-sectional view. In this example, a uniform filter is used. If the filter diameter is not set to be larger than a maximum inscribed radius of the non-segment region, the surface of the curved surface of the base lens will remain exposed. When the filter is arranged in a honeycomb pattern as described above, the relationship of filter diameter > arrangement spacing $p \times \sqrt{3} \div 2$ - planar size d is established. In this example, the diameter is 0.3 mm.

Thereafter, the segment height and the effective occlusion effect become large or small due to smoothing, and therefore as shown in FIG. 9 (c), as a third procedure, adjustment by scaling is performed in a height direction while checking the shape and performance. Thus, the convex portions 12b in each segment region 12a and the non-segment region 12c between the segment regions 11 are completed.

When machining such a surface shape, it is acceptable to convert it to spline data and add it to the base curve of the curved surface of the base lens.

By going through the above-described procedures, the optical surface of the spectacle lens 10 of this embodiment can be designed.

After the optical surface has been designed, the spectacle lens 10 of this embodiment can be manufactured based on the result of the design. Specifically, for example, a mold that reflects the result of the design is created, and a lens base material is created by performing molding processing using the mold, and then, if necessary, an optical film is formed on the lens base material, to thereby obtain the spectacle lens 10 of this embodiment.

Regarding the design method or manufacturing method of the spectacle lens 10, specific contents not described here may be realized by utilizing a publicly known technique.

When designing the spectacle lens 10, Gaussian function-like surfaces may be arranged without going through the procedure of forming discontinuous surfaces and then smoothing them, as in the above-described example. This is equivalent to a procedure in which a spherical segment region 12a having a small diameter (planar size d) relative to the spacing (arrangement spacing p) is smoothed by a Gaussian filter having a large diameter.

Further, if an optical film such as an HC film is applied thickly during the manufacture of the spectacle lens 10, the periphery of the segment region 12a may droop, increasing the planar size d in appearance. Therefore, taking this into consideration, a prospective adjustment may be performed at a design stage of the spectacle lens 10 to subtract the amount of expansion from the diameter of the smoothing filter. For example, when the thickness of the HC film is 2 $\mu$m, the planar size d may increase by approximately 0.05 mm, and therefore, by setting the filter diameter to 0.30 - 0.05 = 0.25 mm, an appropriate planar size d can be obtained in accordance with the degree of drooping of the HC film.

(4) Effect of this embodiment

According to this embodiment, one or more of the following effects are achieved.

According to the spectacle lens 10 of this embodiment, since it is provided with a defocus region 12 having a plurality of segment regions 12a, it has a defocusing effect of causing a light beam to be converged on a position different from on the retina, resulting in achieving the effect of suppressing the progression of myopia or improving hyperopia. In addition, since the area ratio of the non-segment regions 12c in the defocus region 12 is 0% or more and 25% or less, the spectacle lens 10 also acts as a low-pass filter that cuts out the high-frequency portion of the contrast curve while leaving the low-frequency portion, resulting in providing the defocusing effect and comfortable fit for a spectacle wearer.

According to the spectacle lens 10 of this embodiment, the clear region 11 is located so as to include the lens center, and the defocus region 12 is located around the clear region 11. Therefore, even when the defocus region 12 provides a defocusing effect, an area for clear vision is provided near the lens center. In this respect also, the spectacle wearer does not feel discomfort. In addition, by positioning the defocus region 12 around the clear region 11, the function for obtaining the effect of suppressing the progression of myopia or improving hyperopia can be provided, when taking into account the rotation of the eyeball.

According to the spectacle lens 10 of this embodiment, by appropriately setting the planar size d and the arrangement spacing p of the segment region, a sufficient defocusing effect is achieved while suppressing scattered reflection due to external light and the like. Therefore, there is no white flickering that appears to others, thereby reducing an unnatural appearance, and improving the aesthetics when wearing the spectacles. In this respect also, the spectacle wearer does not feel discomfort.

As described above, the spectacle lens 10 according to this embodiment enables to suppress or reduce the progression of refractive error, while preventing the spectacle wearer from feeling discomfort when wearing the spectacles.

Further, according to the spectacle lens 10 of this embodiment, the non-segment region 12c is formed in a curved shape so as to cause the light beam to converge on a position on the opposite side of the segment region 12a with the retina sandwiched therebetween, and has a negative power compared to the prescription power of the clear region 11. Therefore, the contrast can be effectively reduced in the high frequency portion of the contrast curve, and the present invention is particularly robust against manufacturing errors in the size of the planar size d of the segment region 12a. Further, the high frequency components neatly fall off while leaving the extremely low frequency components that cause glare, resulting in a comfortable fit for the spectacle wearer. In addition, scattering is reduced. This allows the spectacle wearer to experience a comfortable fit when wearing the spectacles.

(5) Modified example, etc.

The embodiments of the present disclosure have been described above. However, the technical scope of the present invention is not limited to the above-described exemplary disclosure contents, and various modifications are possible without departing from the gist of the present disclosure.

This embodiment shows a case where convex portions are arranged on the object-side surface of the spectacle lens 10, to thereby form the segment regions, but the present invention is not limited thereto. For example, instead of the convex portions, concave portions may be arranged to thereby form the segment regions. Further, the convex or concave portions may be arranged on the eyeball-side surface, instead of the object-side surface of the spectacle lens 10. Further, for example, by being covered by an optical surface having a certain thickness or more, the convex or concave portions may be formed inside the spectacle lens 10 (i.e., other than the surface), to thereby form the segment regions. Further, the convex or concave portions may be formed on a membrane or film, and may be attached to the lens surface or sandwiched inside the lens.

This embodiment shows a case where the spectacle lens 10 is used to treat unilateral amblyopia, but the present invention is not limited thereto and can be used for other purposes.

Description of signs and numerals

10... spectacle lens, 11... clear region, 12... defocus region, 12a... segment region, 12b... convex portion, 12c... non-segment region, 13... second clear region

**Claims**

1.  A spectacle lens comprising:

    a clear region located so as to include a lens center; and
    a defocus region located around the clear region,
    wherein the clear region is configured as a single focal surface to which a prescription power is imparted so that a light beam incident from an object-side surface is emitted from an eyeball-side surface and is converged on a retina of an eyeball of a spectacle wearer;
    the defocus region has a plurality of segment regions to which a power different from the prescription power is imparted so that the light beam incident from the object-side surface is emitted from the eyeball-side surface and is converged on a position different from on a retina of the eyeball of the spectacle wearer; and
    an area ratio of non-segment regions to a combined area of the plurality of segment regions and the non-segment regions other than the segment regions in the defocus region is 0% or more and 25% or less.

2.  The spectacle lens according to claim 1, wherein the plurality of segment regions are arranged with periodicity.

3.  The spectacle lens according to claim 2,

    wherein the plurality of segment regions are arranged such that a center of each segment region is located at a vertex of each triangle constituting a triangular lattice;
    a planar size d on a lens when the segment region exists alone is in a range of 0.25 mm to 2.0 mm; and
    **the planar** size d and an arrangement spacing p satisfy a relationship of 0.866 < p/d < 1.1.

4.  The spectacle lens according to claim 2 or 3, wherein the adjacent segment regions are arranged so as to be in contact with each other.

5.  The spectacle lens according to claim **1,**

wherein the segment region has a convex portion having a positive defocus power with respect to the prescription power so that the light beam is converged on a position closer to an object side than on the retina.

6.  The spectacle lens according to claim 1, wherein the segment region has a concave portion having a negative defocus power with respect to the prescription power so that the light beam is converged on a position farther from an object side than on the retina.

7.  The spectacle lens according to claim 5 or 6, wherein the non-segment region is formed in a curved shape having a defocus power of a different sign from that of the segment region.

8.  The spectacle lens according to claim 7, wherein a first derivative is continuous in the vicinity of a boundary between the segment region and the non-segment region.

9.  The spectacle lens according to claim 1, wherein the segment region is a region formed by a convex closed curve, and the non-segment region is a region formed by a non-convex closed curve.

10. The spectacle lens according to claim 1, including an optical film covering the plurality of segment regions.

11. The spectacle lens according to claim 1, wherein the defocus region is annular with an inner diameter of 6 mm or more and 12 mm or less and an outer diameter of 40 mm or more.

12. The spectacle lens according to claim 11, wherein the segment regions are arranged such that an area ratio of the non-segment regions is different within the defocus region.

13. The spectacle lens according to claim 11 or 12, wherein five or more of the segment regions are included within a range of a predetermined diameter corresponding to a pupil diameter at an arbitrary position within the defocus region.

14. A spectacle lens design method for designing either one of an object side or an eyeball side optical surface, the method comprising:

    a first step of designing an optical surface so that a clear region configured as a single focal surface imparted with a prescription power is located at a position including a lens center, to allow a light beam incident on an object-side surface to be emitted from an eyeball-side surface and converged on a retina of an eyeball of a spectacle wearer; and

a second step of designing the optical surface so that a defocus region having a plurality of segment regions imparted with a power different from the prescription power is arranged around the clear region, to allow the light beam incident on the object-side surface to be emitted from the eyeball-side surface and converged on a position different from on the retina of the eyeball of the spectacle wearer,

wherein the second step is the step of designing the optical surface so that an area ratio of non-segment regions with respect to a combined region of the plurality of segment regions and the non-segment regions other than the segment regions in the defocus region, is 0% or more and 25% or less.

**FIG. 1**

**FIG. 2**

**FIG. 3**

12a

**FIG. 4**

12a    12c

**FIG. 5**

12a    12c

**FIG. 6**

**FIG. 7**

(a)

(b)

(c)

## FIG. 8

Segment $\phi$ 1.3

(a)

Segment $\phi$ 0.32

(d)

Segment $\phi$ 1.0

(b)

Segment $\phi$ 0.25

(e)

Segment $\phi$ 0.63

(c)

Segment $\phi$ 0.15

(f)

## FIG. 9

(a)

(b)

(c)

## INTERNATIONAL SEARCH REPORT

| | International application No. |
|---|---|
| | **PCT/JP2024/013093** |

| A. | CLASSIFICATION OF SUBJECT MATTER |
|---|---|

*G02C 7/06*(2006.01)i
FI:  G02C7/06

According to International Patent Classification (IPC) or to both national classification and IPC

| B. | FIELDS SEARCHED |
|---|---|

Minimum documentation searched (classification system followed by classification symbols)

G02C1/00-13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104678572 A (THE HONG KONG POLYTECHNIC UNIVERSITY et al.) 03 June 2015 (2015-06-03) | 1-3, 5-6, 9, 11, 13-14 |
| | paragraphs [0001], [0009]-[0039], [0050]-[0057], fig. 1-10 | |
| Y | | 7-8, 10, 12 |
| A | | 4 |
| X | CN 113900275 A (WENZHOU MEDICAL UNIVERSITY) 07 January 2022 (2022-01-07) | 1-6, 11, 13-14 |
| | paragraphs [0001], [0007]-[0031], [0047]-[0084], fig. 1-4 | |
| Y | | 10, 12 |
| A | | 7-9 |
| Y | CN 113341593 A (AERBO TECHNOLOGY CO., LTD.) 03 September 2021 (2021-09-03) | 7-8 |
| | paragraphs [0036]-[0059], fig. 1-5 | |
| Y | WO 2021/059887 A1 (HOYA LENS THAILAND LTD.) 01 April 2021 (2021-04-01) | 10 |
| | paragraphs [0088]-[0120], fig. 1-3 | |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/013093**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2022-146279 A (HOYA LENS THAILAND LTD.) 05 October 2022 (2022-10-05) paragraphs [0016]-[0074], fig. 1-9 | 12 |

Form PCT/ISA/210 (second sheet) (July 2022)

**INTERNATIONAL SEARCH REPORT**
Information on patent family members

International application No.

**PCT/JP2024/013093**

| Patent document cited in search report | | | Publication date (day/month/year) | Patent family member(s) | | | Publication date (day/month/year) |
|---|---|---|---|---|---|---|---|
| CN | 104678572 | A | 03 June 2015 | HK | 1210838 | A1 | |
| | | | | CN | 104678572 | B | |
| CN | 113900275 | A | 07 January 2022 | EP | 4296762 | A1 | |
| | | | | paragraphs [0001], [0007]-[0029], [0032]-[0068], fig. 1-4 | | | |
| | | | | CN | 113900275 | B | |
| | | | | CN | 114994951 | A | |
| | | | | CN | 114994951 | B | |
| | | | | CN | 115032815 | A | |
| | | | | CN | 115032815 | B | |
| | | | | CA | 3219574 | A1 | |
| | | | | AU | 2022372574 | A | |
| | | | | WO | 2023/065556 | A1 | |
| CN | 113341593 | A | 03 September 2021 | CN | 113341593 | B | |
| WO | 2021/059887 | A1 | 01 April 2021 | US | 2022/0244567 | A1 | |
| | | | | paragraphs [0137]-[0184], fig. 1-3 | | | |
| | | | | EP | 4036634 | A1 | |
| | | | | CN | 114222945 | A | |
| | | | | CN | 114222945 | B | |
| | | | | KR | 10-2022-0012916 | A | |
| | | | | JP | 7232927 | B2 | |
| JP | 2022-146279 | A | 05 October 2022 | EP | 4318100 | A1 | |
| | | | | paragraphs [0016]-[0074], fig. 1-9 | | | |
| | | | | US | 2024/0168313 | A1 | |
| | | | | WO | 2022/201749 | A1 | |
| | | | | CN | 116783542 | A | |
| | | | | KR | 10-2023-0159361 | A | |

Form PCT/ISA/210 (patent family annex) (July 2022)

**EP 4 692 910 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021073533 A

- JP 2022068287 A